(19) Europäisches Patentamt
European Patent Office
Office européen des brevets

(11) **EP 2 794 223 B1**

(12) **FASCICULE DE BREVET EUROPEEN**

(45) Date de publication et mention de la délivrance du brevet:
**27.04.2016 Bulletin 2016/17**

(21) Numéro de dépôt: **12818797.8**

(22) Date de dépôt: **12.12.2012**

(51) Int Cl.:
*B29D 30/06* (2006.01)     *B29C 35/08* (2006.01)
*B29C 35/12* (2006.01)     *B29C 33/06* (2006.01)
*H05B 6/10* (2006.01)      *H05B 6/14* (2006.01)
*H01F 27/06* (2006.01)     *H01F 27/24* (2006.01)

(86) Numéro de dépôt international:
**PCT/FR2012/052888**

(87) Numéro de publication internationale:
**WO 2013/093293 (27.06.2013 Gazette 2013/26)**

(54) **PRESSE DE CUISSON POUR EBAUCHE DE PNEUMATIQUE MUNIE D'INDUCTEURS ET INDUCTEUR**

VULKANISIERUNGSPRESSE FÜR REIFENROHLINGE MIT INDUKTOREN UND INDUKTOR

VULCANISING PRESS FOR TYRE BLANKS PROVIDED WITH INDUCTORS, AND INDUCTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2011 FR 1161925**

(43) Date de publication de la demande:
**29.10.2014 Bulletin 2014/44**

(73) Titulaires:
• **Compagnie Générale des Etablissements Michelin**
  **63000 Clermont-Ferrand (FR)**
• **Michelin Recherche et Technique S.A.**
  **1763 Granges-Paccot (CH)**

(72) Inventeurs:
• **FERRAND, Jean-Charles**
  **63040 Clermont-Ferrand**
  **Cedex 9 (FR)**
• **APERCE, Jean-Claude**
  **63040 Clermont-Ferrand**
  **Cedex 9 (FR)**
• **ROCHETTE, Alain**
  **63040 Clermont-Ferrand**
  **Cedex 9 (FR)**
• **VALENTIN, Didier**
  **63040 Clermont-Ferrand**
  **Cedex 9 (FR)**

(74) Mandataire: **Noel, Luminita**
  **M. F. P. MICHELIN**
  **23 place des Carmes-Déchaux**
  **SGD/LG/PI - F35 - Ladoux**
  **63040 Clermont-Ferrand Cedex 9 (FR)**

(56) Documents cités:
**EP-A1- 0 638 409      EP-A1- 2 065 151**
**DE-A1- 4 343 578      JP-A- 52 076 742**
**JP-A- 52 129 035      JP-A- 62 015 504**
**JP-A- 2005 271 336**

## Description

L'invention concerne la fabrication des pneumatiques de roues de véhicule et en particulier les presses de cuisson des ébauches crues de pneumatique.

Le document EP-0 638 409 divulgue un appareil de vulcanisation qui comporte une emboîteuse permettant d'introduire un pneu dans un moule et de transférer au moule l'énergie calorifique nécessaire à la vulcanisation de la gomme au moyen d'inducteurs. L'appareil comporte une chambre annexe accueillant plusieurs moules 1 simultanément et permettant de maintenir chaque moule isolé de l'environnement pour limiter les déperditions calorifiques pendant le temps nécessaire à la vulcanisation.

Le document DE-4 343 578 divulgue un appareil de chauffage qui comprend un générateur et un transformateur connectés dans un circuit électrique oscillant. Le transformateur comporte une armature de bobinage libre à deux branches en forme de « U ». Un fil électrique formant des spires autour de l'armature est enroulé sur chacune des branches de l'armature. Une pièce à chauffer est située en regard des extrémités de l'armature.

Le document JP-52 076 742 divulgue un appareil de chauffage comprenant une armature à trois bras apte à être magnétiquement excitée pour chauffer par effet Joule et transférer la chaleur ainsi générée à une pièce. Chaque bras présente un point de contact avec la pièce, les trois points de contact des trois bras étant alignés pour réduire le bruit électromagnétique généré.

Pour fabriquer un pneumatique de roue, on réalise tout d'abord une ébauche comprenant différents éléments de gomme crue ainsi que des éléments de renfort. On cuit ensuite l'ébauche dans une presse pour réaliser la vulcanisation de la gomme et obtenir l'enveloppe de pneumatique.

Il est connu, par exemple du document EP-0 638 409 au nom de la demanderesse, de chauffer la presse de cuisson par induction électromagnétique. Dans un tel contexte, chaque inducteur peut être équipé d'une armature métallique réalisée en tôle magnétique, parfois appelée tôle électrique, à la manière des transformateurs et des armatures de moteurs synchrones. De tels inducteurs sont utilisés avec des courants alternatifs de fréquences relativement basses, situées par exemple entre 4 et 1000 hertz afin de chauffer les pièces du moule sur une grande partie de leur épaisseur. L'armature porte un bobinage et présente une forme en « U ». De plus, pour un bouclage efficace du champ magnétique au travers de la pièce à chauffer, on place l'inducteur au contact de cette dernière. Il en résulte toutefois deux inconvénients.

Tout d'abord, la pièce, qui peut atteindre une température comprise entre 100 et 400° C, transmet à l'armature une quantité importante de chaleur, ce qui oblige à réaliser le bobinage, ses isolants et ses enrobages avec des matériaux résistants à des températures élevées. Alternativement, on peut doter l'inducteur de moyens de refroidissement. Toutes ces solutions ont un coût substantiel.

De plus, sous l'effet du champ magnétique variable et de l'hystérésis magnétique des pièces à chauffer qui est en général très supérieure à celle des tôles magnétiques, l'inducteur est soumis, à une fréquence double de celle de la tension d'alimentation, à une force d'attraction puis à une force de répulsion tendant à l'éloigner de la pièce à chauffer. Ce phénomène peut engendrer des mouvements et des chocs de l'inducteur sur la pièce susceptible de générer des bruits dépassant 80 décibels. Il engendre aussi une usure des surfaces de l'armature qui heurtent la pièce. Or le bruit constitue une nuisance pour le personnel environnant et l'usure nécessite à terme le remplacement des inducteurs, ce qui représente un coût important et génère des pertes de production. On peut certes plaquer l'inducteur sur la pièce au moyen de différents dispositifs tels que des ressorts ou des vérins pneumatiques ou hydrauliques. Mais ces solutions sont coûteuses sans être toujours efficaces.

En outre, les armatures sont réalisées pour épouser la forme de la pièce à chauffer et présentent des semelles planes en contact avec une surface plane de la pièce. Néanmoins, la pièce est chauffée sur une seule face, ce qui engendre en son sein une dilatation asymétrique qui lui donne une forme bombée. Dès lors, l'armature n'est plus en contact de façon stable avec la pièce et est appliquée sur cette dernière seulement au sommet de la partie bombée. Elle est donc susceptible de bouger encore davantage en roulant et en se balançant sur sa longueur contre la partie bombée, ce qui aggrave les phénomènes de bruit et d'usure. Cette dilatation thermique asymétrique explique que le bruit puisse être faible en début de chauffage puis atteindre des valeurs élevées lorsque la face chauffée de la pièce a gagné significativement en température.

Un but de l'invention est de réduire la température de l'inducteur ainsi que le bruit et l'usure.

A cet effet, on prévoit selon l'invention une presse de cuisson pour ébauche de pneumatique selon la revendication 1.

Ainsi, la surface réduite du ou des éléments de liaison par rapport à celle de la semelle ralentit et limite la transmission de chaleur de la pièce à l'armature. De plus, l'espace entre la semelle et la pièce limite la zone de contact entre ces dernières. Dans ces conditions, si l'inducteur se met à vibrer sous l'effet de la tension d'alimentation, il est moins susceptible de venir heurter la pièce. On limite donc le bruit et l'usure des surfaces de l'armature qui sont au contact de la pièce. C'est le cas, en particulier, pour la partie bombée de la pièce qui est moins susceptible d'être heurtée par l'inducteur.

De préférence, le ou chaque espace est occupé uniquement par de l'air.

Ainsi, l'espace d'air permet une isolation efficace de la semelle par rapport à la pièce chaude.

De préférence, la presse comprend pour chaque semelle deux éléments de liaison disjoints.

Ainsi, tout en limitant leur zone de contact, on assure un maintien stable de l'inducteur sur la pièce. On limite aussi considérablement les possibilités de vibration.

Néanmoins, lorsque l'inducteur et la pièce à chauffer présentent une longueur importante, par exemple supérieure à 300 mm, et que les éléments de liaison sont contigus aux extrémités de la semelle, il peut apparaître deux phénomènes défavorables supplémentaires. Le premier est que la flèche prise par la pièce sous l'effet de la dilatation thermique asymétrique peut dépasser la hauteur des éléments de liaison, c'est-à-dire l'épaisseur de l'espace et ainsi recréer du bruit et de l'usure. Le deuxième est que les forces électromagnétiques alternées peuvent entraîner des déformations alternées de l'armature d'amplitude significative, par exemple supérieure à 0,1 mm, et provoquer sa collision avec la partie bombée de la pièce, ce qui, ici encore, recréé du bruit et de l'usure.

C'est pourquoi, de préférence, le ou chaque élément de liaison s'étend à distance des extrémités longitudinales de la semelle.

En effet, un tel positionnement diminue les déformations de l'inducteur ainsi que la flèche de la portion de la pièce s'étendant entre les éléments de liaison. Cela réduit, voire supprime, le bruit et l'usure précités.

Avantageusement, le ou chaque élément de liaison s'étend à distance d'un centre de la semelle.

On peut prévoir qu'au moins l'un des éléments de liaison de l'inducteur est d'un seul tenant avec l'armature.

On peut aussi prévoir qu'au moins l'un des éléments de liaison de l'inducteur est d'un seul tenant avec la pièce.

Ces deux dernières dispositions simplifient le montage de l'inducteur sur la pièce puisque l'élément de liaison est intégré à l'inducteur ou à la pièce. Toutefois, il est fréquent que ces éléments de liaison finissent par s'user, ce qui conduit alors à remplacer ou à usiner à nouveau toute l'armature ou toute la pièce à chauffer.

C'est pourquoi, de préférence, on prévoit qu'au moins l'un des éléments de liaison forme un organe indépendant de l'armature et de la pièce.

Ainsi cette pièce d'usure peut être facilement remplacée indépendamment de l'armature et de la pièce à chauffer.

Avantageusement, au moins l'un des éléments de liaison est en aramide.

Les aramides présentent en effet deux avantages : ils absorbent une grande quantité de vibrations et permettent de freiner le transfert thermique de la pièce vers l'armature.

De préférence, l'armature comprend un noyau et deux jambes dont les extrémités libres présentent les semelles, l'armature étant telle que :

$$H_J \geq 1{,}1 \times I_A$$

où :

- $H_J$ désigne une hauteur de chaque jambe mesurée depuis la semelle jusqu'à une face de l'armature opposée à la semelle; et
- $I_A$ désigne une largeur du noyau mesurée entre les deux jambes.

Ainsi on dote l'armature de jambes particulièrement longues, ce qui éloigne une grande partie de l'inducteur de la pièce à chauffer, et ralentit donc le transfert thermique de l'une à l'autre. En d'autres termes, on diminue la température vue par le bobinage. Cette disposition favorise en outre le refroidissement de l'armature et du bobinage par convection. De plus, dans le cas où l'armature n'a pas besoin d'être en contact permanent avec la pièce, cet agencement entraîne que l'armature est soumise à des régimes thermiques transitoires particulièrement prononcés. L'allongement des jambes augmente ainsi le temps nécessaire à l'arrivée de la chaleur jusqu'au bobinage, ce qui permet de diminuer la température maximale que ce dernier est susceptible d'atteindre.

On prévoit également selon la revendication 11 de l'invention un inducteur qui comporte :

- un bobinage, et
- une armature ayant deux extrémités libres présentant des semelles respectives, chaque semelle portant au moins un élément de liaison s'étendant en saillie de la semelle de sorte que le ou les éléments de liaison occupent au total moins de la moitié d'une longueur de la semelle.

Nous allons maintenant présenter plusieurs modes de réalisation d'une presse de cuisson selon l'invention en référence aux dessins annexés sur lesquels :

- la figure 1 est une vue en perspective d'une presse de cuisson pour pneumatique selon l'invention ;
- les figures 2 et 3 sont des vues de l'un des inducteurs fixé à la presse de la figure 1 ; et
- les figures 4 à 7 illustrent d'autres modes de réalisation de la presse.

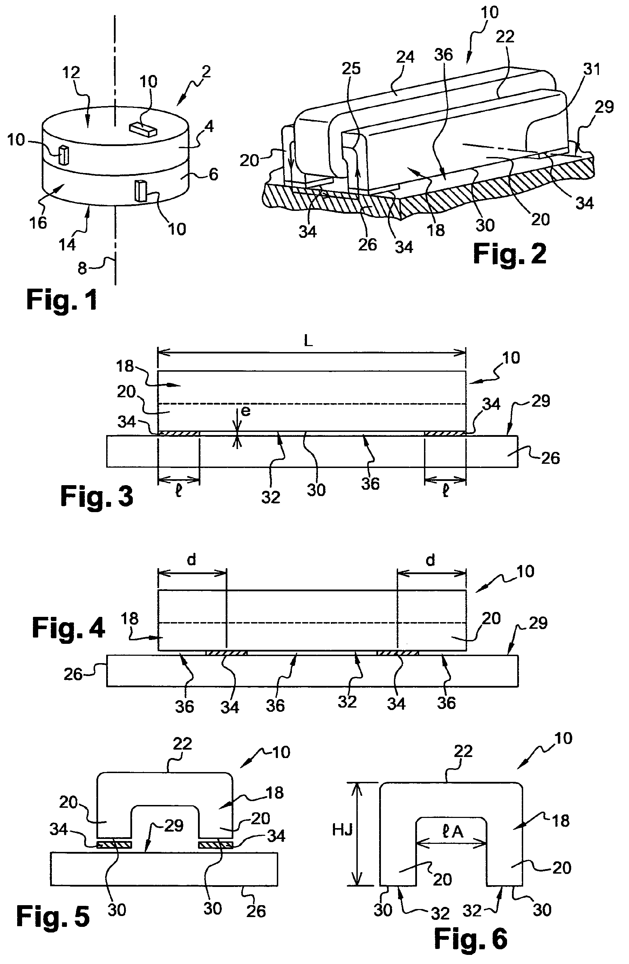

On a illustré aux figures 1 à 3 une presse 2 servant à la cuisson d'ébauches crues de pneumatique de roue. Ces pneumatiques sont destinés par exemple à des véhicules de type léger, des véhicules de tourisme, des véhicules utilitaires, des véhicules de type poids lourd ou encore à des engins de génie civil.

La presse 2 comprend deux parties supérieure 4 et inférieure 6 mobiles à coulissement l'une par rapport à l'autre suivant la direction verticale qui est celle d'un axe de symétrie principal 8 de la presse, pour ouvrir et fermer la presse. Ces parties renferment des portions de moule permettant de conférer sa forme définitive au pneumatique lors de la cuisson de l'ébauche.

A cette fin, la presse est équipée d'inducteurs 10 disposés contre différentes parties de la presse, sur leurs faces externes, afin de procurer la chaleur nécessaire à la vulcanisation de la gomme qui forme en grande partie l'ébauche reçue dans la presse. On pourra prévoir ainsi de placer un ou plusieurs inducteurs contre une face horizontale supérieure 12 ou inférieure 14 de la presse ou encore contre une face latérale verticale 16 de cette dernière.

Tous les inducteurs sont ici du type de celui qui a été illustré en détail aux figures 2 et 3. L'inducteur 10 comprend une armature métallique 18 ayant une forme allongée profilée à section transversale en « U ». Elle comprend ainsi deux jambes 20 correspondant aux branches du « U » et s'étendant parallèlement l'une à l'autre et un noyau ou coeur 22 reliant l'une à l'autre deux extrémités des jambes. L'armature est métallique et réalisée en tôles magnétiques.

L'inducteur comprend en outre un bobinage 24 d'axe 31 formé par l'enroulement d'un ou plusieurs fils conducteurs de l'électricité autour du noyau 22 et entre les deux jambes 20. En fonctionnement, ce bobinage est alimenté en courant électrique par une source de courant non représentée et de façon classique. Cette alimentation engendre l'apparition d'un flux magnétique 25 dans le bobinage et dans l'armature qui réalise un bouclage électromagnétique dans la pièce 26 du moule contre laquelle l'inducteur est placé. Ce champ magnétique engendre dans la pièce l'apparition de courants de Foucault qui par effet Joule produisent le chauffage de la pièce puis, par conduction électrique à travers le moule, celui de l'ébauche.

Les deux jambes 20 s'étendent à partir des deux extrémités axiales du bobinage 24 qui en constituent les pôles et en direction de la pièce 26. La partie de chaque jambe la plus proche de la pièce est formée par son extrémité libre 30 qui présente une semelle plane 32. Les semelles sont coplanaires et s'étendent en regard et à distance de la pièce 26, parallèlement à sa face externe 29.

Entre la pièce et chaque semelle sont interposés deux éléments de liaison 34, en l'espèce identiques l'un à l'autre. Chaque élément 34 a ici la forme d'un parallélépipède rectangle de faible épaisseur, cette épaisseur e étant mesurée suivant la direction allant de la pièce 26 à l'inducteur. Les deux éléments de liaison associés à une même semelle sont contigus aux extrémités longitudinales respectives de la semelle. Ils présentent la même largeur qu'elles de sorte que trois des quatre faces latérales de chaque élément de liaison sont coplanaires avec des faces respectives de l'armature.

Les deux éléments 34 sont disjoints si bien qu'ils sont intégralement distants l'un de l'autre et ménagent entre eux un espace 36 occupé uniquement par de l'air, s'étendant sur toute la largeur de la semelle et dans lequel la semelle s'étend en regard de la pièce 26 et à distance de cette dernière. Les deux éléments de liaison 34 s'étendent également à distance d'un centre de la semelle et d'une portion centrale de cette dernière.

La plus grande dimension de chaque jambe est constituée par sa longueur L mesurée perpendiculairement à la direction allant de la pièce à l'inducteur et perpendiculairement à l'axe 31. Les deux éléments de liaison occupent au total moins de la moitié de cette longueur. En d'autres termes, la somme 21 de leurs longueurs respectives l est inférieure à la moitié de cette longueur. En l'espèce, les deux éléments de liaison occupent environ le tiers de la longueur L de la jambe. L'espace 36 occupe donc à lui seul plus de la moitié de la longueur de la jambe et plus des deux tiers en l'espèce.

Ce sont donc les quatre éléments de liaison qui assurent à eux seuls l'interface entre l'inducteur et la pièce 26. On peut prévoir que les éléments de liaison sont réalisés d'un seul tenant avec les jambes respectives 20 en s'étendant en saillie des semelles 32 correspondantes. On peut prévoir à l'inverse qu'ils sont réalisés d'un seul tenant avec la pièce 26 en s'étendant par conséquent en saillie de la face 29.

Un tel agencement permet de limiter le transfert thermique de la pièce 26 vers l'inducteur 10. En effet, un transfert de chaleur par conduction ne peut avoir lieu qu'à travers les éléments de liaison 34. A cette fin, on peut même faire en sorte que les éléments de liaison représentent une faible fraction de l'interface entre les jambes et la pièce et par exemple seulement 10 % de la surface correspondante. Afin de ne pas diminuer l'efficacité de l'induction, il est préférable que l'épaisseur e de l'espace 36 demeure faible et soit par exemple comprise entre 0,1 et 1 mm.

Positionner, comme c'est le cas en l'espèce, les éléments de liaison 34 aux extrémités des semelles donne à l'armature une très bonne assise sur la pièce. Par ailleurs, on a expliqué plus haut que la face externe de la pièce 26 pouvait prendre une forme bombée sous l'effet de la dilatation asymétrique. Ce mode de réalisation limite les possibilités de contact entre l'armature et cette face bombée, voire les supprime tout à fait dans de nombreux cas, ce qui évite les chocs entre eux ainsi que le bruit et l'usure.

Néanmoins, lorsque l'inducteur et la pièce ont des longueurs importantes, il peut se produire dans une telle configuration deux phénomènes indésirables. D'une part, la flèche prise par la pièce peut dépasser l'épaisseur e et donc engendrer à nouveau bruit et usure. D'autre part, les forces électromagnétiques alternées peuvent entraîner des déformations alternées de l'armature dont les jambes et en particulier les semelles 30 prennent successivement une forme convexe ou concave et non la forme plane rectiligne visible sur la figure 3. Ces déformations qui peuvent être d'amplitude significative et par exemple supérieure à 0,1 mm peuvent engendrer des collisions avec la face bombée de la pièce, générant ainsi à nouveau bruit et usure.

C'est pour y remédier qu'on propose le mode de réalisation de la figure 4. Ce dernier est en tout point semblable à celui de la figure 3 sauf en ce qui concerne la position des éléments de liaison 34 qui sont cette fois placés à distance des extrémités de la semelle 30. Cette distance est ici supérieure à la longueur *l* de chaque élément. La longueur de l'espace 36 séparant les deux éléments demeure néanmoins supérieure à la somme 2l de la longueur des deux éléments. En l'espèce, le centre de chaque élément de liaison est situé à une distance d de l'extrémité de la semelle la plus proche qui est égale au quart de la longueur L.

Dans cette configuration, on ménage ainsi entre chaque semelle 30 et la pièce 26 trois espaces 36 se succédant suivant la longueur de la semelle et séparés par les éléments de liaison respectifs. A nouveau, ces derniers occupent au total moins de la moitié de la longueur de la semelle, sont disjoints et s'étendent à distance du centre de la semelle.

Cet agencement diminue les possibilités de déformation de l'inducteur ainsi que la flèche de la pièce à chauffer, cette flèche étant limitée à l'espace 36 séparant les deux éléments de liaison. On limite voire on supprime toute possibilité de collision entre l'armature et la pièce et donc le bruit et l'usure qui s'ensuivent.

Dans le mode de réalisation de la figure 5, l'inducteur est en tous points identique à celui de la figure 3 ou en variante à celui de la figure 4 mis à part que les éléments de liaison 34 forment chacun une pièce d'usure indépendante et séparée à la fois de la pièce 26 et de l'armature 18. En effet, dans les modes de réalisation précédents, les éléments de liaison finissent par s'user. En réalisant ici ces éléments sous la forme de pièces d'usure indépendantes, on facilite grandement leur remplacement.

Ces pièces peuvent être réalisées dans tous matériaux amagnétiques tels que : l'acier inoxydable amagnétique, le laiton, l'aluminium, un fil ou un textile (tissé ou non) de méta-aramide ou de para-aramide. Les aramides sont particulièrement intéressants ici car ils possèdent deux avantages: ils absorbent les vibrations et freinent le transfert thermique de la pièce 26 vers l'armature. De même, les matériaux ductiles peuvent également servir de pièce d'usure préférentielle.

Les éléments de liaison 34 peuvent être fixés rigidement à l'inducteur et à la pièce 26 par toute méthode convenant à un tel contexte, par exemple par vissage, rivetage, clipsage, couture, laçage ou encore collage résistant à la température (notamment avec une pâte graphitée ou du silicone).

Dans le mode de réalisation de la figure 6 qui est lui aussi compatible avec les précédents, la presse se distingue de celle de la figure 3 uniquement par les dimensions et la forme de l'armature. On désigne par $H_J$ la hauteur de chaque jambe 20 mesurée depuis la semelle 32 jusqu'à la face opposée de l'armature qui est la face supérieure sur les figures. On désigne par ailleurs par $I_A$ la largeur du noyau 22 de l'armature mesurée comme étant la distance entre les deux jambes 20. Dans les précédents modes de réalisation, $H_J$ était inférieure ou égale à $I_A$. En l'espèce, $H_J$ est supérieure ou égale à 1,1 x $I_A$. En l'espèce, la hauteur des jambes vaut même une fois et demie la largeur de l'armature.

Dans ce mode de réalisation, on a donc allongé les jambes 20 suivant la direction perpendiculaire au plan de la semelle afin d'éloigner le noyau 22 et le bobinage autant que possible de la pièce à chauffer. Cela diminue la température vue par le bobinage en limitant et en ralentissant le transfert thermique de la pièce jusqu'au noyau et au bobinage. Cet agencement augmente également le refroidissement de l'armature par convection entre les jambes.

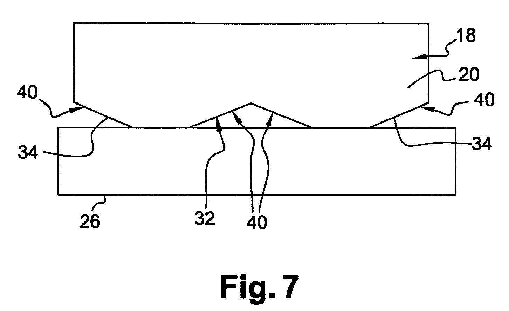

Dans le mode de réalisation de la figure 7 qui montre l'une des jambes 20 de l'armature, les éléments de liaison 34 sont réalisés d'un seul tenant avec les jambes respectives 20. De plus, la semelle 32 de la jambe a une forme non plane. Dans cet exemple, cette forme est telle que la semelle s'évase à partir de chaque élément de liaison en présentant à partir de chacun d'eux deux faces planes 40 légèrement inclinées l'une par rapport à l'autre et ici symétriques l'une de l'autre. Les éléments de liaison étant ici au nombre de deux par jambe, il y a quatre faces 40 par semelle 32. Ces faces 40 permettent de ménager l'usure des éléments de liaison ou portées. En effet, lorsque ces éléments 34 commencent à s'user, leur surface de contact avec la pièce augmente, ce qui ralentit la progression de l'usure.

L'invention est peu coûteuse à mettre en oeuvre et permet de ramener le bruit généré par les inducteurs à moins de 70 décibels.

Bien entendu, on pourra apporter à l'invention de nombreuses modifications sans sortir du cadre de celle-ci.

On peut envisager de relier au moins une des semelles à la pièce 26 au moyen d'un unique élément de liaison ou au contraire au moyen de trois éléments de liaison ou davantage.

Pour limiter le transfert thermique de la pièce 26 vers l'inducteur sans chercher à obtenir tous les avantages précités en termes de réduction du bruit, on peut prévoir d'interposer entre eux un ou plusieurs éléments de fixation sans requérir que ceux-ci occupent au total moins de la moitié d'une longueur de la semelle mais en faisant en sorte qu'ils occupent moins de la moitié de la surface de la semelle.

Par ailleurs, on pourra prévoir une armature dans laquelle $H_J$ est supérieure ou égale à 1,1 x $I_A$ sans prévoir les conditions dimensionnelles précitées associées aux éléments de liaison.

Les éléments de liaison pourront présenter une forme autre que celle d'un parallélépipède rectangle, par exemple une forme de galette ou d'étoile.

On peut mettre en oeuvre l'invention dans un autre contexte que celui d'une presse de cuisson d'ébauche de pneumatique, c'est-à-dire l'appliquer à tout inducteur destiné à chauffer une pièce métallique.

## Revendications

**1.** Presse (2) de cuisson pour ébauche de pneumatique, qui comprend :

- une pièce (26), et
- au moins un inducteur (10) comportant une armature (18) ayant deux extrémités libres (30) présentant des semelles (32) aptes à réaliser un bouclage électromagnétique dans la pièce,

**caractérisée en ce qu'**elle comprend en outre, pour chaque semelle, au moins un élément de liaison (34) reliant la semelle à la pièce et ménageant entre celles-ci au moins un espace (36), le ou les éléments de liaison associés à la semelle occupant au total au moins de la moitié d'une longueur (L) de la semelle.

**2.** Presse selon la revendication précédente dans laquelle le ou chaque espace (36) est occupé uniquement par de l'air.

**3.** Presse selon au moins l'une quelconque des revendications précédentes, qui comprend pour chaque semelle deux éléments de liaison disjoints (34).

**4.** Presse selon au moins l'une quelconque des revendications précédentes, dans laquelle le ou chaque élément de liaison (34) s'étend à distance des extrémités longitudinales de la semelle.

**5.** Presse selon au moins l'une quelconque des revendications précédentes, dans laquelle le ou chaque élément de liaison (34) s'étend à distance d'un centre de la semelle.

**6.** Presse selon au moins l'une quelconque des revendications précédentes, dans laquelle au moins l'un des éléments de liaison de l'inducteur est d'un seul tenant avec l'armature (18).

**7.** Presse selon au moins l'une quelconque des revendications précédentes, dans laquelle au moins l'un des éléments de liaison de l'inducteur est d'un seul tenant avec la pièce (26).

**8.** Presse selon au moins l'une quelconque des revendications précédentes, dans laquelle au moins l'un des éléments de liaison (34) forme un organe indépendant de l'armature et de la pièce.

**9.** Presse selon au moins l'une quelconque des revendications précédentes, dans laquelle au moins l'un des éléments de liaison (26) est en aramide.

**10.** Presse selon au moins l'une quelconque des revendications précédentes, dans laquelle l'armature comprend un noyau (22) et deux jambes (20) dont les extrémités libres présentent les semelles, l'armature étant telle que :

$$H_J \geq 1,1 \times I_A$$

où :

- $H_J$ désigne une hauteur de chaque jambe mesurée depuis la semelle jusqu'à une face de l'armature opposée à la semelle; et
- $I_A$ désigne une largeur du noyau mesurée entre les deux jambes.

**11.** Inducteur (10) qui comporte :

- un bobinage (24), et
- une armature (18) ayant deux extrémités libres (30) présentant des semelles respectives (32),

**caractérisé en ce que** chaque semelle porte au moins un élément de liaison (34) s'étendant en saillie de la semelle de sorte que le ou les éléments de liaison occupent au total au moins de la moitié d'une longueur (L) de la semelle.

## Patentansprüche

**1.** Heizpresse (2) für einen Luftreifenrohling, die enthält:

- ein Bauteil (26), und
- mindestens einen Induktor (10), der einen Anker (18) mit zwei freien Enden (30) aufweist, die Grundplatten (32) aufweisen, die eine elektromagnetische Rückkopplung im Bauteil herstellen können,

**dadurch gekennzeichnet, dass** sie außerdem für jede Grundplatte mindestens ein Verbindungselement (34) enthält, das die Grundplatte mit dem Bauteil verbindet und zwischen diesen mindestens einen Raum (36) freilässt, wobei das oder die der Grundplatte zugeordneten(n) Verbindungselement(e) insgesamt weniger als die Hälfte einer Länge (L) der Grundplatte einnimmt(einnehmen).

**2.** Presse nach dem vorhergehenden Anspruch, wobei der oder jeder Raum (36) nur von Luft eingenommen wird.

**3.** Presse nach mindestens einem der vorhergehenden Ansprüche, die für jede Grundplatte zwei getrennte Verbindungselemente (34) enthält.

**4.** Presse nach mindestens einem der vorhergehenden Ansprüche, wobei das oder jedes Verbindungselement (34) sich in Abstand zu den Längsenden der Grundplatte erstreckt.

5. Presse nach mindestens einem der vorhergehenden Ansprüche, wobei das oder jedes Verbindungselement (34) sich in Abstand zu einer Mitte der Grundplatte erstreckt.

6. Presse nach mindestens einem der vorhergehenden Ansprüche, wobei mindestens eines der Verbindungselemente des Induktors aus einem Stück mit dem Anker (18) besteht.

7. Presse nach mindestens einem der vorhergehenden Ansprüche, wobei mindestens eines der Verbindungselemente des Induktors aus einem Stück mit dem Bauteil (26) besteht.

8. Presse nach mindestens einem der vorhergehenden Ansprüche, wobei mindestens eines der Verbindungselemente (34) ein vom Anker und vom Bauteil unabhängiges Organ bildet.

9. Presse nach mindestens einem der vorhergehenden Ansprüche, wobei mindestens eines der Verbindungselemente (26) aus Aramid ist.

10. Presse nach mindestens einem der vorhergehenden Ansprüche, wobei der Anker einen Kern (22) und zwei Schenkel (20) enthält, deren freie Enden die Grundplatten aufweisen, wobei der Anker derart ist, dass gilt:

$$H_J \geq 1{,}1 \times I_A$$

wobei:

- $H_J$ eine Höhe jedes Schenkels gemessen von der Grundplatte bis zu einer Seite des Ankers gegenüber der Grundplatte bezeichnet; und
- $I_A$ eine Breite des Kerns gemessen zwischen den zwei Schenkeln bezeichnet.

11. Induktor (10), der aufweist:

- eine Wicklung (24), und
- einen Anker (18) mit zwei freien Enden (30), die jeweilige Grundplatten (32) aufweisen,

**dadurch gekennzeichnet, dass** jede Grundplatte mindestens ein Verbindungselement (34) trägt, das sich von der Grundplatte vorstehend derart erstreckt, dass das oder die Verbindungselement(e) insgesamt weniger als die Hälfte einer Länge (L) der Grundplatte einnimmt(einnehmen).

**Claims**

1. Vulcanizing press (2) for curing green tyre blanks, comprising:

- a component (26),
- at least one inductor (10) comprising an armature (18) having two free ends (30) exhibiting soles (32) which are able to close the electromagnetic loop through the component,

**characterized in that** it comprises, for each sole, at least one connecting element (34) connecting the sole to the component and forming between the two of them at least one space (36), the connecting element or elements associated with the sole occupying in total less than half of a length (L) of the sole.

2. Press according to the preceding claim, in which the or each space (36) is occupied only by air.

3. Press according to at least either one of the preceding claims, which for each sole comprises two separate connecting elements (34).

4. Press according to at least any one of the preceding claims, in which the or each connecting element (34) extends away from the longitudinal ends of the sole.

5. Press according to at least any one of the preceding claims, in which the or each connecting element (34) extends away from a centre of the sole.

6. Press according to at least any one of the preceding claims, in which at least one of the connecting elements of the inductor is of one piece with the armature (18).

7. Press according to at least any one of the preceding claims, in which at least one of the connecting elements of the inductor is of one piece with the component (26).

8. Press according to at least any one of the preceding claims, in which at least one of the connecting elements (34) forms a member independent of the armature and of the component.

9. Press according to at least any one of the preceding claims, in which at least one of the connecting elements (26) is made of aramid.

10. Press according to at least any one of the preceding claims, in which the armature comprises a core (22) and two legs (20) the free ends of which exhibit the soles, the armature being such that:

$$H_J \geq 1.1 \times I_A$$

where:

- $H_J$ denotes a height of each leg measured from the sole up to a face of the armature that is the opposite face to the sole; and
- $I_A$ denotes a width of the core measured between the two legs.

11. Inductor (10), that comprises:

- a coil (24), and
- an armature (18) having two free ends (30) exhibiting respective soles (32),

**characterized in that** each sole bears at least one connecting element (34) extending as a projection from the sole so that the connecting element or elements occupy in total less than half a length (L) of the sole.

**Fig. 1**

**Fig. 2**

**Fig. 3**

**Fig. 4**

**Fig. 5**

**Fig. 6**

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0638409 A
- DE 4343578
- JP 52076742 B